# EUROPEAN PATENT APPLICATION

(11) **EP 4 733 152 A1**
(43) Date of publication of application: **29.04.2026**
(21) Application number: 24209302.9
(22) Date of filing: 28.10.2024
(51) Int. Cl.: B60R 21/231

(54) **AIRBAG FOR A VEHICLE, AIRBAG MODULE, AND VEHICLE**

(71) Applicant: Volvo Car Corporation, 405 31 Göteborg (SE)
(72) Inventor: NILSSON, Henrik, 40531 Göteborg (SE)
(74) Representative: Kransell & Wennborg KB

(57) **Abstract**

The disclosure relates to an airbag (24) for a vehicle. The airbag (24) comprises an envelope (26) at least partially delimiting a gas volume in a deployed state (30) of the airbag (24). The envelope (26) comprises a contact surface (32) configured to contact the vehicle occupant (12) to be protected by the airbag (24). At least a portion of the contact surface (32) has directional slipping properties. The slipping properties in a lateral direction (B) are associated with a higher slipping resistance than the slipping properties in a non-lateral direction (C). Additionally, an airbag module (22) and a vehicle are described.

## Description

### TECHNICAL FIELD

The present disclosure relates to an airbag for a vehicle. The airbag comprises an envelope at least partially delimiting a gas volume in a deployed state of the airbag. The envelope comprises a contact surface configured to contact the vehicle occupant to be protected by the airbag.

Moreover, the present disclosure is directed to an airbag module.

Additionally, the present disclosure relates to a vehicle.

### BACKGROUND ART

Nowadays, vehicles usually include several safety systems for reducing an injury level of occupants in the vehicle. These safety systems are particularly used in case of collisions or accidents. Examples of such safety systems comprise airbag modules. Typically, in case of a frontal crash situation, wherein the external forces act against the driving direction, an airbag of the airbag module prevents that a head of the occupant collides with parts of the vehicle interior, such as the dashboard or the steering wheel.

### SUMMARY

It is therefore an objective of the present disclosure to further improve the protection of occupants during a crash situation of the vehicle.

The problem is at least partially solved or alleviated by the subject matter of the independent claims of the present disclosure, wherein further examples are incorporated in the dependent claims.

According to a first aspect, there is provided an airbag for a vehicle. The airbag comprises an envelope at least partially delimiting a gas volume in a deployed state of the airbag. The envelope comprises a contact surface configured to contact the vehicle occupant to be protected by the airbag. At least a portion of the contact surface has directional slipping properties. The slipping properties in a lateral direction are associated with a higher slipping resistance than the slipping properties in a non-lateral direction. The airbag may be understood as a bag that may be selectively inflated with gas in case of an accident. Gas may be air or any other gaseous matter. Thus, the airbag may assume a compact state in which it is stowed inside the vehicle, if not needed. In case the airbag is inflated, the airbag may transfer from the compact state into a deployed state. In simplified words, the airbag may act as a cushion that protects the vehicle occupant in case of a collision. In this context, slipping properties characterize a manner in which the vehicle occupant may slip with respect to the contact surface, if the vehicle occupant contacts the contact surface. Due to the fact that the slipping properties are directional, they are different along different directions. According to the present disclosure, the slipping properties in a lateral direction are associated with a higher slipping resistance than the slipping properties in non-lateral direction, wherein the lateral direction and the non-lateral directions correspond to a lateral direction and non-lateral directions of the vehicle. This means that a lateral direction refers to a direction oriented substantially perpendicular to a standard forward driving direction of the vehicle and non-lateral directions refer to all other directions. Consequently, the vehicle occupant, more precisely the body part of the vehicle occupant, contacting the contact surface, e.g. the vehicle occupant's head, may move more easily in non-lateral directions than in a lateral direction. It is understood that the non-lateral directions also include a longitudinal direction. In simplified words, the body part of the vehicle occupant, e.g. the vehicle occupant's head, may move more easily in non-lateral directions than in a lateral direction while in contact with the contact surface of the envelope during the collision. This alleviates mechanical stress on the vehicle occupant and, thus, the risk of injuries of the vehicle occupant may be reduced. This applies in particular to a neck of the vehicle occupant. Moreover, in case the vehicle is involved in a collision situation, wherein the external forces do not only act along the driving direction, the risk of the occupant's body part contacting the contact surface, e.g. the head, slipping laterally off the airbag may be reduced. Therefore, the safety of the vehicle occupant may be increased.

The effects of the present disclosure will be understood in more detail when considering the following example of a collision event. If this collision event is a head-on, frontal collision, the inertial forces act in the direction of the original motion, in the present example in the longitudinal direction of the vehicle. Thus, both the head and the torso of the vehicle occupant will move into a forward longitudinal direction. It is noted that the movement of the torso of the occupant of the vehicle may be limited if the occupant uses a seatbelt as generally recommended. In the event the collision leads to deployment of the airbag, the movement of the head of the occupant will be directed towards and into the airbag. Since the occupant's neck connects the head and the torso of the occupant, the occupant's neck will be subject to mechanical stress, e.g. a force or a torque, if the head and the torso move differently. This may be due to the fact that the torso is restrained by the seatbelt in a different manner than the movement of the head is restrained by the airbag. Moreover, differences in the movement of the torso and the head may result from collision forces not purely acting against the longitudinal direction but having lateral components. According to the present disclosure, the slipping properties, i.e. the slipping of the head with respect to the airbag, is directional, wherein in a lateral direction the slipping properties are associated with a higher slipping resistance than the slipping properties in a non-lateral direction. Consequently, the head may slip along a non-lateral direction more easily than in a lateral direction. Due to this slipping, mechanical stress on the neck may be alleviated since the head may move relative to the airbag such that the mechanical stress on the neck is reduced. At the same time, the high slipping resistance along the lateral direction ensures that the head does not slip off the airbag. Thus, the mechanical stress is reduced while a high level of safety is kept. It is noted that these effects and advantages of the present disclosure also apply in other collision events which are not head-on, frontal collisions, e.g. in case of an angled collision or a rear-end collision.

According to an example, the portion of the contact surface comprises two layers arranged on top of one another. An outer layer of the two layers is movable with respect to an inner layer of the two layers. A movement in the lateral direction is restricted. Thus, in case of an accident, the vehicle occupant, more precisely a body part of the vehicle occupant, e.g. the head, contacts the outer layer. Due to the movability of the outer layer with respect to the inner layer, the vehicle occupant's body part may slide more easily in non-lateral directions than in lateral directions. Stated otherwise, the vehicle occupant's body part may move together with the outer layer relative to the inner layer. As has been mentioned before, this alleviates mechanical stress on the vehicle occupant, in particular on the vehicle occupant's neck. Therefore, the risk of injuries of the vehicle occupant may be further reduced. By restricting the movement in the lateral direction, the risk of the occupant's head slipping off the contact surface, in more detail off the outer layer, may be reduced.

According to an example, the outer layer is formed by a pleat of the inner layer. In other words, the inner layer and the outer layer are formed from one part, wherein this one part is folded in order to form both the inner layer and the outer layer. In an example, multiple pleats may be used to form the outer layer. This means that the outer layer may be formed by a plurality of outer layer portions, wherein each outer layer portion is formed by a pleat. The pleat may be movable such that the outer layer is movable with respect to the inner layer. Moreover, the pleat or pleats may be arranged such that a movability in non-lateral directions is higher or larger than in a lateral direction. Thus, forming the outer layer by a pleat of the inner layer is a comparatively simple and reliable configuration to allow for movability of the outer layer with respect to the inner layer.

According to an example, the pleat is T-shaped in cross section. In this context, T-shaped means having the shape of a capital letter T. Such a pleat offers a comparatively high movability along a direction that corresponds to a direction of the horizontal bar of the capital letter T. Thus, the desired slipping properties may be achieved using such pleats.

According to an example, the inner layer and the outer layer are formed by different parts connected to one another. This means that the part from which the inner layer is formed and the part from which the outer layer is formed are distinct from one another. In other words, the inner layer is formed by a part and the outer layer is formed by another part. This has the effect that the outer layer and the inner layer may be designed individually. This means that physical properties and/or a material may be different for the inner layer and the outer layer. Moreover, forming the inner layer and the outer layer by different parts offers a comparatively simple and reliable manner to generate the directional slipping properties.

According to an example, the outer layer is elastically deformable. In this context, elastically deformable may be understood in that the outer layer may be capable of being stretched or expanded, if subject to a force, and being capable of resuming its former shape, if the force is withdrawn. The outer layer being elastically deformable has the effect that the relative movement of the outer layer may be facilitated. Further, such elastic property may allow the outer layer to stretch or expand such that absorbing the impact forces may be further improved.

According to an example, the outer layer is fixedly connected to the inner layer along a lateral direction and loosely connected to the inner layer along non-lateral directions. In this context, fixedly connected may be understood in that the connection does not allow for a relative movement of the inner layer and the outer layer with respect to one another. Further, loosely connected may be understood as a connection that allows for a certain relative movability of the inner layer and the outer layer with respect to one another. Thus, using the combination of a fixed connection in the lateral direction and a loose connection in the non-lateral directions allows to reliably provide directional slipping properties.

According to an example, the airbag further comprises a friction reduction coating at least locally provided between the two layers. By using a friction reduction coating, friction between the inner layer and the outer layer is reduced. Thus, a relative movement of the inner layer and the outer layer with respect to one another is facilitated, thereby also facilitating the directional slipping properties.

According to an example, in a deployed state of the airbag, the contact surface comprises a concave portion. From the perspective of the vehicle occupant, the concave portion forms a depression in the contact surface. Thus, a body part of the vehicle occupant contacting the contact surface may be fully or partially received in the concave portion. This has the effect that the occupant's body part is reliably positioned or held on the contact surface. Thus, the risk of the occupant's body part, e.g. head, slipping off the contact surface may be reduced.

According to an example, the portion of the contact surface comprises a frictional coating having directional friction properties. Thus, the friction properties are different along different directions. This may lead to directional slipping properties. In other words, a slipping resistance may be different in different directions. In an example, directional friction properties in lateral direction may be associated with a higher slipping resistance than the directional friction properties in non-lateral direction. Thus, a vehicle occupant's body part, e.g. head, may move with respect to the contact surface more easily in non-lateral directions than in a lateral direction. As has been explained before, this enhances the safety of the vehicle occupant.

According to an example, the frictional coating comprises a rubber material. Using rubber material, the directional friction properties of the frictional coating may be achieved in a comparatively simple and reliable manner.

According to an example, the envelope is made of fabric material. Fabric material may be a textile material. Such a material is well-suitable for an airbag.

According to a second aspect, there is provided an airbag module. The airbag module comprises an inflator and an airbag of the first aspect. The inflator may be a unit or assembly configured to swell or inflate the airbag. In more detail, the inflator may comprise a connection interface that is connectable to the envelope of the airbag. Thus, using the inflator, the airbag may be transferred from the compact state into the deployed state. As has been explained before, using such an airbag module enhances the safety for a vehicle occupant.

According to a third aspect, there is provided a vehicle. The vehicle comprises an airbag of the first aspect or an airbag module of the second aspect. As has been mentioned above, in case of a crash situation, the airbag may assume the deployed state. During such crash situation, external forces act on the vehicle occupant. Thus, the vehicle occupant accelerates towards the airbag and collides with the airbag such that impact forces act on the airbag. Due to the defined directional slipping properties, the body part of the vehicle occupant, e.g. the head, may interact with the contact surface of the envelope such that slipping between the body part and the contact surface may be reduced in a lateral direction, wherein slipping is facilitated in non-lateral directions. Thus, the risk of injuries of the vehicle occupant may be reduced. Consequently, the safety of the vehicle may be improved. Moreover, in case the vehicle is involved in a collision situation, wherein the external forces do not only act in the driving direction, the risk of the occupant's head slipping laterally off the airbag may be reduced.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure, wherein the vehicle comprises an airbag module comprising an airbag according to the present disclosure,
- Figure 2: schematically shows a steering unit and the airbag module of the vehicle of Figure 1 in a separate view, wherein the airbag is in a compact state,
- Figure 3: schematically shows a steering unit and the airbag module of the vehicle of Figure 1 in a separate view corresponding to the view of Figure 2, wherein the airbag is in a deployed state,
- Figure 4: shows an example of the airbag in the deployed state, where a contact surface has an outer layer that is formed by a pleat of an inner layer,
- Figure 5: shows a lateral view along direction V of the airbag of Figure 4,
- Figure 6: shows a sectional view along VI-VI in Figure 4,
- Figure 7: shows another example of the airbag in the deployed state, wherein the inner layer and the outer layer are formed by different parts connected to one another,
- Figure 8: shows a sectional view along plane VIII-VIII of the airbag of Figure 7,
- Figure 9: shows a further example of the airbag in the deployed state, where the outer layer is elastically deformable,
- Figure 10: shows a sectional view along plane X-X of the airbag of Figure 9,
- Figure 11: shows still another example of the airbag in the deployed state, where the airbag comprises a concave portion,
- Figure 12: shows a sectional view along plane XII-XII of the airbag of Figure 11,
- Figure 13: shows a further example of the airbag in the deployed state, where a portion of the contact surface comprises a frictional coating, and
- Figure 14: shows the airbag of Figure 13 in a lateral view along direction XIV.

### DETAILED DESCRIPTION

The Figures are merely schematic representations and serve only to illustrate examples of the disclosure. Identical or equivalent elements are in principle provided with the same reference signs.

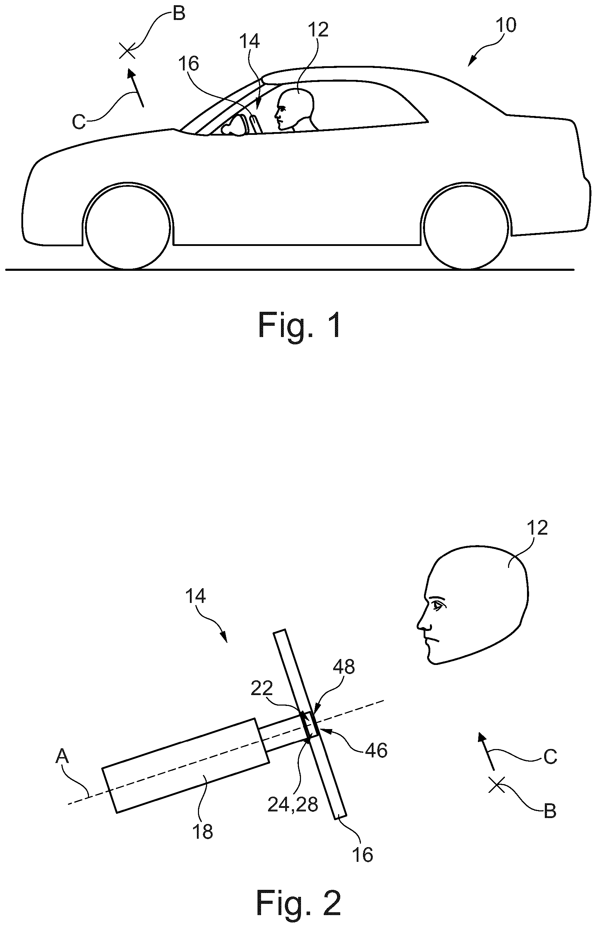

Figure 1 shows a vehicle 10. A vehicle occupant 12 is located in the vehicle 10. In the present example, the vehicle occupant 12 is a driver.

The vehicle comprises a steering unit 14.

As shown in Figure 2, the steering unit 14 includes a steering wheel 16 that is mechanically connected to a steering shaft assembly 18.

The steering wheel 16 is rotatable around a steering axis A such that the vehicle occupant 12 may change the driving direction of the vehicle 10.

The steering shaft assembly 18 may be adjustable in a translatory direction along the steering axis A.

The vehicle 10 further comprises an airbag module 22.

The airbag module 22 comprises an inflator 20 and an airbag 24.

The airbag 24 may assume a compact state 28 in which the airbag 24 is located in a center portion of the steering wheel 16. In order to make the airbag 24 arrangeable in the center portion, the airbag 24 is folded.

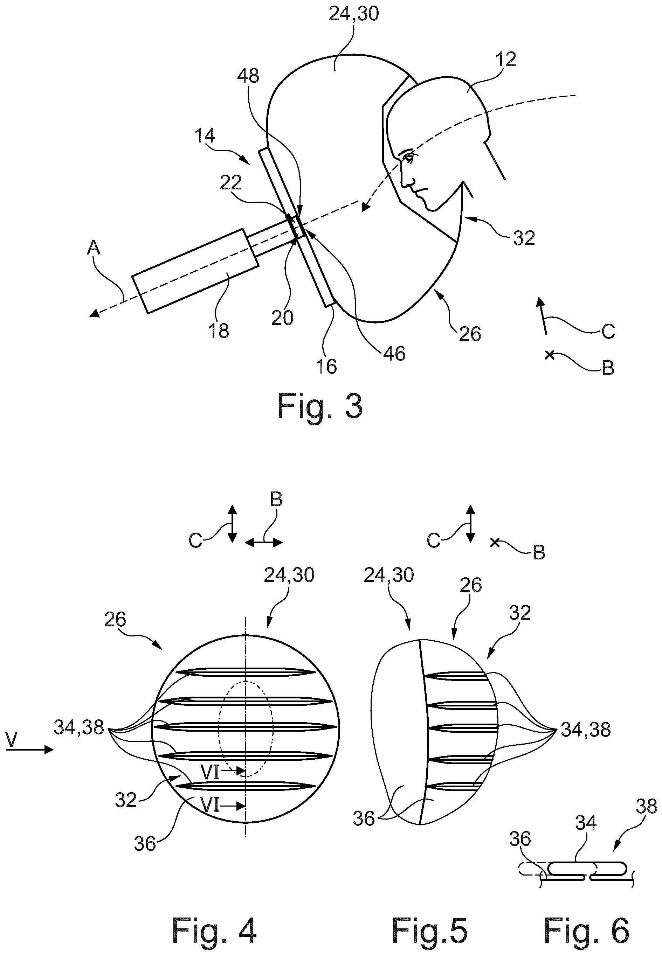

Moreover, the airbag 24 may be inflated using the inflator 20, such that the airbag 24 transitions from the compact state 28 into a deployed state 30 (see Figure 3). The airbag 24 may assume the deployed state 30 in case of a vehicle crash situation.

The airbag comprises an envelope 26 which at least partially delimits a gas volume in the deployed state 30 of the airbag 24.

In the present example, the envelope 26 is made of fabric material.

The envelope 26 comprises a contact surface 32 configured to contact the vehicle occupant 12 to be protected by the airbag 24. More precisely, the contact surface 32 is configured to contact a body part of the vehicle occupant 12, e.g. a head of the vehicle occupant 12.

At least a portion of the contact surface 32 has directional slipping properties which, according to the present disclosure, can be configured differently in lateral and non-lateral direction.

Thereby, the slipping properties in a lateral direction B can be associated with a higher slipping resistance than the slipping properties in a non-lateral direction C. It is understood that the non-lateral direction C is just one example of a non-lateral direction. This example is representative of all other non-lateral directions.

This means that a body part, generally the head of the vehicle occupant 12, moving in lateral direction B experience a higher slipping resistance than a body part slipping in a non-lateral direction C.

In the following, five examples of the airbag 24 will be described with reference to Figures 4 to 14.

Figures 4 to 6 show a first example. In this example, the portion of the contact surface 32 comprises two layers arranged on top of one another.

An outer layer 34 of the two layers is movable with respect to an inner layer 36 of the two layers.

A movement in the lateral direction B is restricted.

The outer layer 34 is formed by a plurality of pleats 38 of the inner layer 36.

The pleats 38 have T-shaped cross sections as can be seen from Figure 6.

Optionally, in this example, the airbag 24 may further comprise a friction reduction coating which is at least locally provided between the two layers. Thus, the friction reduction coating is at least locally provided between the inner layer 36 and the outer layer 34. By configuring the friction reduction coating, the friction, or slipping properties, between outer layer 34 and the inner layer 36 can be controlled.

If the airbag 24 according to the first example is in use, i.e. if a body part of the vehicle occupant 12, e.g. the head, contacts the contact surface 32, slipping of the body part of the vehicle occupant 12 along a non-lateral direction C is possible to a certain extent. This is due to the fact that the pleats 38 are deformable to a certain extend along the non-lateral direction C. This is illustrated in Figure 6 in that a non-deformed pleat 38 is illustrated using a solid line and a deformed pleat 38 is illustrated using a dashed line.

In the lateral direction B, the pleats 38 do not offer any such deformability. Thus, the body part may not slip along the lateral direction B.

It is noted that in the example shown in Figures 4 to 6, the pleats 38 substantially extend over the entire contact surface 32. However, this is just one option. According to a variant, it is also possible to provide the pleats 38 in a smaller portion of the contact surface 32 as indicated by the double dot and dash line in Figure 4. Due to the restriction of the pleats 38 to the portion indicated by the double dot and dash line, a risk of the vehicle occupant 12 slipping of the airbag 24 would be reduced.

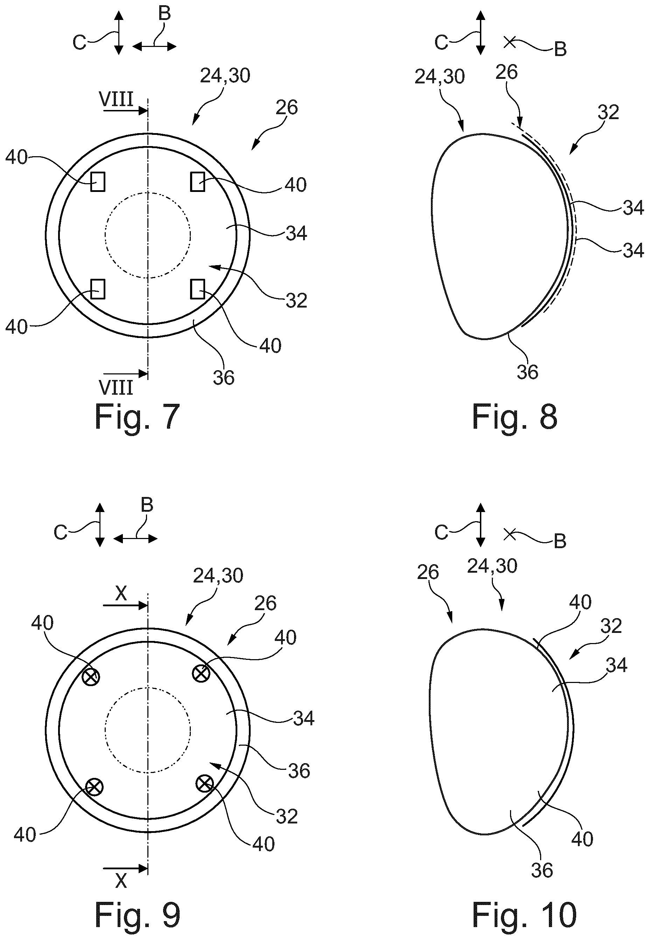

Figures 7 and 8 show a second example. In the following, only the differences over the first example will be explained.

In the second example, the inner layer 36 and the outer layer 34 are formed by different parts connected to one another.

The outer layer 34 is fixedly connected to the inner layer 36 along a lateral direction B and loosely connected to the inner layer 36 along non-lateral directions C.

The fixed connection and the loose connection are achieved by using four connector elements 40.

The four connector elements 40 are stripe-shaped fabric parts. Thus, the four connector elements 40allow a non-lateral movement of the outer layer 34, wherein a movement in the lateral direction is restricted.

Optionally, also in this example, the airbag 24 may further comprise a friction reduction coating which is at least locally provided between the two layers.

If the airbag 24 according to the second example is in use, i.e. if a body part of the vehicle occupant 12, e.g. the head, contacts the contact surface 32, slipping of the body part of the vehicle occupant 12 along a non-lateral direction C is possible to a certain extent. This is due to the fact that the part forming the outer layer 34 may move with respect to the part forming the inner layer 36 along the non-lateral direction C.

In the lateral direction B, such a relative movement between the inner layer 36 and the outer layer 34 is not possible. Thus, the body part may not slip along the lateral direction B.

In order to illustrate this functionality, the outer layer 34 is represented twice in Figure 8. The outer layer 34 is shown in a non-displaced state using a solid line and in a displaced state using a dashed line.

It is noted that in the example shown in Figures 7 and 8, the outer layer 34 extends over a comparatively large portion of the contact surface 32. However, this is just one option. According to a variant, it is also possible that the outer layer 34 only extends over a smaller portion of the contact surface 32 as indicated by the double dot and dash line in Figure 7. Due to the restriction of the outer layer 34 to the portion indicated by the double dot and dash line, a risk of the vehicle occupant 12 slipping of the airbag 24 would be reduced.

A third example of the airbag 24 is shown in Figures 9 and 10. As before, only the differences with respect to the previous examples will be explained.

The third example can be considered as a variant of the second example, wherein the outer layer 34 is elastically deformable. Due to this, the outer layer 34 may be fixedly connected to the inner layer 36.

Optionally, also in this example, the airbag 24 may further comprise a friction reduction coating at least locally provided between the two layers.

If the airbag 24 according to the third example is in use, i.e. if a body part of the vehicle occupant 12, e.g. the head, contacts the contact surface 32, slipping of the body part of the vehicle occupant 12 along a non-lateral direction C is possible to a certain extent. This is due to the elasticity of the outer layer 34. Thus, the outer layer 34 may move with respect to the part forming the inner layer 36 along the non-lateral direction C.

In the lateral direction B, such a relative movement between the inner layer 36 and the outer layer 34 is not possible. Thus, the body part may not slip along the lateral direction B.

It is noted that in the example shown in Figures 9 and 10, the outer layer 34 extends over a comparatively large portion of the contact surface 32. However, this is just one option. According to a variant, it is also possible that the outer layer 34 only extends over a smaller portion of the contact surface 32 as indicated by the double dot and dash line in Figure 9. Due to the restriction of the outer layer 34 to the portion indicated by the double dot and dash line, a risk of the vehicle occupant 12 slipping of the airbag 24 would be reduced.

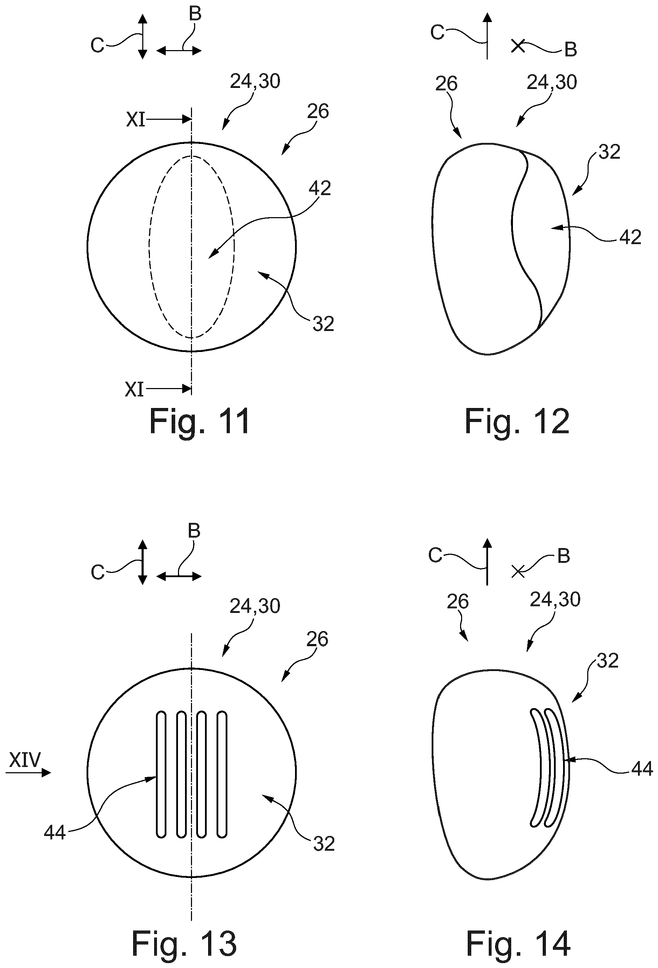

Figures 11 and 12 show a fourth example. As before, only the differences over the previous examples will be explained.

In the fourth example, the envelope 26 does not necessarily comprise two layers. In the example shown in the figures, the envelope 26 is formed by a single layer.

In order to generate the directional slipping properties, the contact surface 32 comprises a concave portion 42, if the airbag 24 is in the deployed state 30.

The concave portion 42 is elongated and is open at ends associated with a non-lateral direction C.

This form of the airbag 24 may be achieved by the use of straps and tethers in the interior of the airbag 24 as well as by the geometry of the envelope 26.

Thus, if the airbag 24 according to the fourth example is in use, i.e. if a body part of the vehicle occupant 12, e.g. the head, contacts the contact surface 32, slipping of the body part of the vehicle occupant 12 along a non-lateral direction C is possible since the body part may slide along the concave portion. In the lateral direction B, the concave portion 42 is closed such that the body part is held inside the concave portion along this direction. Thus, the body part may not slip along the lateral direction B.

A fifth example of the airbag 24 is shown in Figures 13 and 14. As before, only the differences over the previous examples will be explained.

In the fifth example, the contact surface 32 comprises a frictional coating 44 having directional friction properties, herein generally referred to as directional slipping properties.

The frictional coating 44 comprises a rubber material.

In the example shown in Figures 13 and 14, the frictional coating 44 is provided on the contact surface 32 in the form of stripes extending perpendicular to the lateral direction B.

Thus, if the airbag 24 according to the fifth example is in use, i.e. if a body part of the vehicle occupant 12, e.g. the head, contacts the contact surface 32, slipping of the body part of the vehicle occupant 12 along a non-lateral direction C is possible or easier than slipping in the lateral direction B. This is due to the fact that slipping in the lateral direction B would imply slipping in a direction perpendicular to the stripes of rubber material forming the frictional coating, whereas slipping in a non-lateral direction C implies slipping at least partially along these stripes.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: vehicle occupant
- 14: steering unit
- 16: steering wheel
- 18: steering shaft assembly
- 20: inflator
- 22: airbag module
- 24: airbag
- 26: envelope
- 28: compact state
- 30: deployed state
- 32: contact surface
- 34: outer layer
- 36: inner layer
- 38: pleat
- 40: connector element
- 42: concave portion
- 44: frictional coating

- B: lateral direction
- C: non-lateral direction

## Claims

1. An airbag (24) for a vehicle (10), the airbag (24) comprising:
an envelope (26) at least partially delimiting a gas volume in a deployed state (30) of the airbag (24),
wherein the envelope (26) comprises a contact surface (32) configured to contact the vehicle occupant (12) to be protected by the airbag (24),
wherein at least a portion of the contact surface (32) has directional slipping properties, and
wherein the slipping properties in a lateral direction (B) are associated with a higher slipping resistance than the slipping properties in a non-lateral direction (C).

2. The airbag (24) of claim 1, wherein the portion of the contact surface (32) comprises two layers arranged on top of one another, wherein an outer layer (34) of the two layers (34, 36) is movable with respect to an inner layer (36) of the two layers (34, 36), and wherein a movement in the lateral direction (B) is restricted.

3. The airbag (24) of claim 2, wherein the outer layer (34) is formed by a pleat (38) of the inner layer (36).

4. The airbag (24) of claim 3, wherein the pleat (38) is T-shaped in cross section.

5. The airbag (24) of claim 2, wherein the inner layer (36) and the outer layer (34) are formed by different parts connected to one another.

6. The airbag (24) of claim 5, wherein the outer layer (34) is elastically deformable.

7. The airbag (24) of claim 5 or 6, wherein the outer layer (34) is fixedly connected to the inner layer (36) along a lateral direction (B) and loosely connected to the inner layer (36) along the non-lateral directions (C).

8. The airbag (24) of any one of claims 2 to 7, further comprising a friction reduction coating at least locally provided between the two layers (34, 36).

9. The airbag (24) of any one of the preceding claims, wherein in a deployed state (30) of the airbag (24), the contact surface (32) comprises a concave portion (42).

10. The airbag (24) of any one of the preceding claims, wherein the portion of the contact surface (32) comprises a frictional coating (44) having directional friction properties.

11. The airbag (24) of claim 10, wherein the frictional coating (44) comprises a rubber material.

12. The airbag (24) of any one of the preceding claims, wherein the envelope (26) is made of fabric material.

13. An airbag module (22) comprising an inflator (20) and an airbag (24) of any one of the preceding claims.

14. A vehicle (10) comprising an airbag (24) of any one of the claims 1 to 12 or an airbag module (22) of claim 13.
